# EUROPEAN PATENT SPECIFICATION

(11) **EP 4 124 512 B1**
(45) Date of publication and mention of the grant of the patent: **21.05.2025**
(21) Application number: 21187918.4
(22) Date of filing: 27.07.2021
(51) Int. Cl.: B60R 16/03

(54) **ENERGY SUPPLY MODULE AND ENERGY SUPPLY MANAGEMENT SYSTEM**
ENERGIEVERSORGUNGSMODUL UND ENERGIEVERSORGUNGSVERWALTUNGSSYSTEM
MODULE D'ALIMENTATION EN ÉNERGIE ET SYSTÈME DE GESTION D'ALIMENTATION EN ÉNERGIE

(43) Date of publication of application: 01.02.2023
(73) Proprietor: KNORR-BREMSE Systeme für Nutzfahrzeuge GmbH, 80809 München (DE)
(72) Inventor: KISS, David, 2066 Szár (HU); TOTH, Zoltan, 1046 Budapest (HU); DERZSI, Andras, 2146 Mogyoród (HU); LINDNER, Peter, 2300 Ráckeve (HU); NEMETH, Huba, 1116 Budapest (HU)

(56) References cited:
- EP-A1- 1 591 320
- EP-A1- 3 170 701
- WO-A1-2004/042888
- WO-A1-2009/145678

## Description

The present invention relates to an energy supply module for a vehicle and a respective energy supply management system.

The electrification in the automotive sector has triggered replacements of several vehicle components resulting in novel architectures. For example, many components of commercial vehicles used to rely on compressed air as energy source for control and actuation purposes. A redundant energy supply system based on compressed air was implemented for several safety relevant components. Due to the electrification many of these pneumatic components are to be replaced by electrically powered components. In addition, automated driving applications set new requirements for the vehicle systems and, in particular, for safety relevant consumer units.

For redundancy reasons or to scale an electrical system, multiple energy storage units may be used, as for example described in EP 1 591 320 A1.

Due to the architecture of the electrical system, there may be a demand to control the multiple energy storage units and charging of the multiple energy storage units individually. This may require individual chargers for each energy storage unit. As a result, the integration of such electrical system becomes complex and expensive. Furthermore, switches that protect the energy storage units from being operated outside safe operating conditions and assure an overcurrent circuit protection are very responsive solid-state devices. Accordingly, long connection lines, like busbars or cables, between the energy storage units and a charging unit, like a battery or DC/DC converter, may lead to significant energy losses in the overall electrical system to be considered.

In view of the above, it is an object of the present invention to provide an energy supply module for a vehicle and an energy supply management system for a vehicle to reduce complexity with respect to the use of energy storage units.

The object is solved by an energy supply module for a vehicle according to claim 1 and an energy supply management system for a vehicle according to claim 16. Further aspects of the present invention are subject to the dependent claims.

According to the present invention, an energy supply module for a vehicle comprises at least one energy output terminal, at least one energy storage unit and at least one output energy supply line to connect the at least one energy storage unit to the at least one energy output terminal. Further, at least one energy storage switching unit is arranged in or connected to the output energy supply line between the at least one energy storage unit and the at least one energy output terminal. The at least one energy storage switching unit is configured to at least disconnect the at least one energy storage unit from the at least one energy output terminal.

Accordingly, the energy supply module is a compartment or assembly group comprising at least one energy output terminal, at least one energy storage unit and at least one output energy supply line to connect the at least one energy storage unit to the at least one energy output terminal. As the at least one energy storage switching unit is comprised by the energy supply module to at least disconnect the at least one energy storage unit from the at least one energy output terminal, the at least one energy storage unit may be protected against any potential risk arising from an external connection to the energy output terminal, like an over current or over voltage, by being disconnected by the at least one energy storage switching unit. In turn, such disconnection may also protect any external components connected to the at least one energy output terminal from any potential risk arising from the at least one energy storage unit. Furthermore, such disconnection may avoid energy losses if the at least one energy storage unit is not operated to provide an energy supply.

The at least one storage supply switching unit may be configured as or comprise at least a switch or a fuse. The energy supply line may be configured as or comprise a busbar and/or a cable.

In some embodiments, the at least one energy storage switching unit is located closer to the at least one energy storage unit than to the at least one energy output terminal.

Due to the at least one energy storage switching unit being located closer to the at least one energy storage unit than to the at least one energy output terminal, the length of the energy supply line between the at least one energy storage switching unit and the at least one energy storage unit may be reduced. Therefore, energy losses between the at least one energy storage switching unit and the at least one energy storage unit may be reduced. Preferably, the at least one energy storage switching unit is located in the vicinity of the at least one energy storage unit.

In some embodiments, the energy supply module further comprises at least one energy output switching unit arranged in or connected to the at least one output energy supply line between the at least one energy storage switching unit and the at least one energy output terminal. The at least one energy output switching unit is configured to at least disconnect the at least one energy output terminal from the at least one energy storage unit.

Accordingly, the energy supply module comprises at least one energy output switching unit in addition to the at least one energy storage switching unit. In the event of only one energy storage unit and one energy output terminal, the at least one energy output switching unit and the at least one energy storage switching unit may provide the same functionality and may therefore be implemented for redundancy reasons and/or with respect to different switching characteristics. However, if the energy supply module comprises a plurality of energy storage units and/or a plurality of energy output terminals, a selective disconnection allows only at least a selected one of energy storage units and/or at least a selected one of the energy output terminals to be disconnected without affecting the remaining energy storage units and/or energy output terminals.

In some embodiments, the at least one energy output switching unit is located closer to the at least one energy output terminal than to the at least one energy storage switching unit.

Similar to the at least one energy storage switching unit being located closer to the at least one energy storage unit than to the energy output terminal, due to the at least one energy output switching unit being located closer to the at least one energy output terminal than to the at least one energy storage switching unit, the length of the energy supply line between the at least one energy output switching unit and the at least one energy output terminal may be reduced. Therefore, energy losses between the at least one energy output switching unit and the at least one energy output terminal may be reduced. Preferably, the at least one energy output switching unit is located in the vicinity of the at least one energy output terminal. With respect to the positioning of the at least one energy output switching unit and/or the at least one energy storage switching unit as previously described, the energy supply module does not only allow to reduce energy losses due to the compact design of the energy supply module. Specifically, the positioning of the at least one energy output switching unit and/or the at least one energy storage switching unit may allow an adjustment of the distribution of energy losses according to such positioning. As an overall concept, positioning any of the switching units within the energy supply module reduces the length of energy supply lines between the energy storage unit and a respective switching unit in comparison to a positioning of any of the switching units outside the energy supply module, for example, a switching unit of a consumer unit. As a result, energy losses of a energy supply management system as described later may be reduced. Additionally, the efficiency of the respectively positioned switching units may be enhanced.

Further, with respect to a plurality of energy storage units and/or a plurality of energy output terminals, the selective disconnection in such arrangement provides a clear architecture. For example, the energy supply unit may comprise three energy storage units connected to one energy output terminal. Each of the energy storage units is associated with one energy storage switching unit before single energy supply lines are combined to the energy supply line to be connected to the energy output terminal. The energy output terminal is associated with an energy output switching unit. In the event of a failure of one of the energy storage units, the respective energy storage switching unit disconnects the respective energy storage unit from the energy supply line and therefore from the energy output terminal. However, energy from the other energy storage units may still be supplied to the energy output terminal. In the event of a failure of the energy output terminal, the energy output switching unit disconnects the energy output terminal from any of the energy storage units at once. In another example, the energy supply unit may comprise one energy storage unit connected to three energy output terminals. Each of the energy output terminals is associated with one energy output switching unit in a single energy supply line branched from the energy supply line to be connected to each of the energy output terminals. The energy storage unit is associated with an energy storage switching unit. In the event of a failure of one of the energy output terminals, the respective energy output switching unit disconnects the respective energy output terminal from the energy supply line and therefore from the energy storage unit. However, energy from the energy storage unit may still be supplied to the remaining energy output terminals. In the event of a failure of the energy storage unit, the energy storage switching unit disconnects the energy storage unit from any of the energy output terminals at once. The principles of the given examples also apply vice versa with respect to a combination of a plurality of energy storage units and a plurality of energy output terminals. A plurality of energy storage units and/or a plurality of energy output terminals as per the given examples is not restricted to three and may be more or less. Further, the number of energy storage units and energy output terminals does not have to be equal.

In some embodiments, the energy supply module further comprises at least one energy input terminal and at least one input energy supply line to connect the at least one energy storage unit to the at least one energy input terminal.

Accordingly, the energy supply module is not only capable of supplying energy from the at least one energy storage unit, but also to charge the at least one energy storage unit via the energy input terminal and the energy input supply line. An energy charge unit may therefore not be required within the energy supply module. The at least one input terminal is configured to receive a respective terminal connection of a charge device.

In some embodiments, the at least one input energy supply line is connected to the at least one output energy supply line.

The number of supply lines may therefore be reduced.

In some embodiments, the energy supply module further comprises at least one charge management unit for the at least one energy storage unit. The at least one charge management unit is arranged in or connected to the input energy supply line between the at least one energy input terminal and the at least one energy storage unit.

The at least one charge management unit is configured to manage, for example, the amount, time and/or type of energy supply to charge the at least one energy storage unit from the energy input terminal via the input energy supply line. The at least one charge management unit may also comprise at least one energy charge unit. In such event, the at least one energy input terminal may be omitted. However, additional energy may be provided via the at least one energy input terminal. Alternatively or in addition, the at least one energy input terminal may be used for redundancy reasons or as back-up.

In some embodiments, the at least one charge management unit comprises or is configured as a converter unit, preferably a DC/DC converter unit.

The at least one charge management unit comprising or being configured as converter unit allows a conversion of an input energy received from the energy input terminal in type of energy suitable for charging the energy storage unit. Preferably, the converter unit is configured as or comprises a DC/DC converter unit to convert a direct current from one voltage level to another. Alternatively, the converter unit may be configured as or comprise an AC/DC converter unit or a DC/AC converter.

In some embodiments, the energy supply module further comprises at least one energy input switching unit arranged in or connected to the at least one input energy supply line between the at least one energy input terminal and the at least one energy storage switching unit. The at least one energy input switching unit is configured to at least disconnect the at least one charge management unit, the at least one energy storage unit and/or the output energy supply line from the energy input terminal.

Accordingly, the at least one charge management unit, the at least one energy storage unit and/or the output energy supply line may be disconnected from the energy input terminal to avoid any influence by a charge device connected to the energy input terminal or vice versa. Preferably, the energy input switching unit is arranged between the charge management unit and the energy storage unit to also avoid any mutual influences and associated risk by disconnecting the energy storage unit from the charge management unit via the energy input switching unit.

In some embodiments, the at least one energy input switching unit, the at least one energy output switching unit and/or the at least one energy storage switching unit is/are configured to also connect the respective one of the at least one charge management unit, the at least one energy storage unit and/or the output energy supply line to the energy input terminal, the at least one energy output terminal to the at least one energy storage unit and/or the at least one energy storage unit to the at least one energy output terminal, respectively.

In other words, the at least one energy input switching unit may be configured to also connect the at least one charge management unit, the at least one energy storage unit and/or the output energy supply line to the energy input terminal. Alternatively or in addition, the at least one energy output switching unit may be configured to also connect the at least one energy output terminal to the at least one energy storage unit. Alternatively or in addition, the at least one energy storage switching unit may be configured to also connect the at least one energy storage unit to the at least one energy output terminal. Accordingly, any disconnection may be reversed.

In some embodiments, at least one of the at least one energy input switching unit and the at least one energy storage switching unit comprises or is configured as a normally open switch.

Accordingly, the at least one energy input switching unit and/or the at least one energy storage switching unit has to be activated to close the respective switch to connect the at least one energy storage unit to the at least one energy input terminal and/or the at least one energy output terminal, respectively. Therefore, a risk of an unintended connection of the at least one energy storage unit to the at least one energy input terminal and/or the at least one energy output terminal, respectively, may be reduced. As a result, the at least one energy storage unit may be protected from any failure of or transferred by the at least one energy input terminal and/or the at least one energy output terminal, respectively, and vice versa. Furthermore, unnecessary energy losses may be avoided.

In some embodiments, the at least one energy storage switching unit comprises or is configured as a normally closed switch.

Accordingly, the at least one energy storage switching unit has to be deactivated to connect the at least one energy storage unit to the at least one energy input terminal and/or the at least one energy output terminal, respectively. Therefore, a connection of the at least one energy storage unit from the at least one energy input terminal and/or the at least one energy output terminal, respectively, is not interrupted by at least one energy storage switching unit, as long as the at least one energy storage switching unit is not activated. In other words, a risk of an unintended interruption by the at least one energy storage switching unit may be reduced. The at least one energy storage switching unit comprising or being configured as a normally closed switch may be advantages for an energy supply module or at least a respective energy storage unit intended to supply energy for safety critical functions.

In some embodiments, at least one of at least the at least one energy input switching unit, the at least one energy output switching unit and the at least one energy storage switching unit comprises or is configured as a smart switch.

A smart switch is configured to detect a failure, like a reverse polarity, an over voltage, an under voltage, an over current and/or a temperature exceeding or falling below a predetermined threshold. The smart switch may be configured to transmit a respective failure signal to a control unit configured to switch the smart switch accordingly. Alternatively or in addition, the smart switch is capable of processing respective signals within a smart switch processor unit to switch itself. A smart switch as a self-switching switch may provide faster reaction times. An additional control unit may function as a redundant security level as the smart switch may fail. Further, the control unit separate from the smart switch may also allow the respective switch being switched due to other events not detectable by the switch itself, like a failure of a downstream component.

In some embodiments, at least one of at least the at least one energy input switching unit, the at least one energy output switching unit and the at least one energy storage switching unit comprises at least one switch and at least one fuse.

The at least one fuse in addition to the at least one switch may provide a redundant safety level. Accordingly the threshold for blowing the at least one fuse may be set to a value above an upper disconnecting threshold of the respective switch to allow the switch to disconnect first before unnecessarily blowing the fuse. In other words, the threshold for blowing is configured in such way that in case of a failure the respective switch would disconnect prior to the fuse. However, if the switch has a failure and does not disconnect in such event, the disconnection may then be realized by the fuse.

In some embodiments, the energy supply module provides a carrier unit, preferably comprising or configured as an enclosure with the at least one energy output terminal or the at least one energy output terminal and the at least one energy input terminal as interface for the at least one energy storage unit enclosed by the enclosure.

The carrier unit may be configured to provide attachment and/or insertion means to mount and/or insert the energy supply module to or into an energy supply management system. Accordingly, the energy supply module may be configured as a drawer or plug-in module due to the configuration of the carrier unit and/or energy input terminal and/or energy output terminal. The carrier unit may also function as ground. Further, the carrier unit may function as heat sink of the energy supply module to reduce the risk of overheating of the energy supply module.

Preferably, the carrier unit comprises or is configured as an enclosure. The enclosure may therefore form the outer contour of the energy supply module. The enclosure allows protection of the components inside the enclosure like the at least one energy storage unit, the at least one energy storage switching unit, the at least one energy output switching unit, the at least one energy input switching unit and/or the at least one discharge management unit. The enclosure may provide a protection against mechanical impact and/or electrical impact in terms of electrical shielding properties.

In another aspect, the present invention also relates to an energy supply management system for a vehicle. The energy supply management system comprises at least one energy supply module as previously described. Further, the energy supply management system comprises at least one consumer unit configured to be connectable to the at least one energy output terminal of the at least one energy supply module.

The energy supply management system comprising at least one energy supply module as previously described allows a flexible exchange, reduction and/or addition of energy supply modules, for example, to replace a defective energy supply module and/or to change performance characteristics of an energy supply module or a configuration of several energy supply modules. Each energy supply module may be assigned to one consumer unit, one consumer of a consumer unit, a group of consumer units, a group of consumers or all consumer units. Accordingly, the energy supply module provides one or several energy output terminals. The energy supply module may also comprise more than one energy storage unit. The number of energy storage units may correspond to the number of energy output terminals. Alternatively, at least one additional energy storage unit may be comprised by the energy supply unit for redundancy reasons or to enhance the amount of available energy for one energy output terminal. The plurality of energy storage units may be at least partially identical or different to allow an adaption of the energy to be supplied to different consumer units or consumers, respectively. For example, consumer units with different nominal supply voltages may receive a required energy supply by being connected to different energy output terminals each of which associated with a different appropriate energy storage unit. Alternatively or in addition, different energy storage units may be selectively connectable to one output energy terminal based on the switching state of respective energy storage switching units. The energy storage supply system comprising at least one energy supply module as previously described may therefore provide an enhanced flexibility and scalability. Furthermore, due the at least one energy storage switching unit, the at least one energy output switching unit and/or the at least one energy input switching unit comprised by the at least one energy supply module, the length of connection lines provided by the output energy supply line or output energy supply line and input energy supply line may be sufficiently short to reduce energy losses between such switches and the at least one energy storage unit.

With the energy supply management system comprising an energy supply module with an energy input terminal, a consumer unit connected to an energy output terminal may also receive energy from another external energy storage or energy supply unit connected to the energy input terminal. Such external energy storage or energy supply unit may therefore not only be used to charge the at least one energy storage unit of the energy supply unit may alternatively or in addition supply energy to the energy output terminal.

In some embodiments, the energy supply management system comprises at least two energy supply modules and the consumer unit comprises at least two consumers each of which is configured to be connectable to one of the at least two energy supply modules.

Accordingly, the energy supply management system provides independent energy supply modules for at least one of the at least two consumers which may, for example, allow an independent energy supply control for each of the at least two consumers. At least one of the at least two consumers may also be connectable to both of the at least two energy supply modules, e.g. to enhance the available energy supply and/or for redundancy reasons. Consequently, as one of the energy supply modules or a respective one of the energy storage units, respectively, may fail, the respective consumer or consumers may still receive energy from the other energy supply module or a respective one of the energy storage units, respectively. Preferably, the at least two consumers comprise at least partially identical functions. Accordingly, if one of the consumers and/or one of the energy supply modules fail, the other consumer may still be able to provide the at least partially identical functions. The at least partially identical functions preferably comprise at least a coverage of safety-critical or safety-critical and safety-relevant functions. Safety critical functions are mandatory for operating a vehicle. If any of the critical functions is not in a predetermined functional state, a safety critical failure is assumed and, for example, the vehicle has to be brought into a safe state within a predetermined fault tolerant time interval or an emergency operation shall be started and finished within an emergency operation tolerant time interval. A possible safe state may be, as an example, the vehicle is being stopped. A safety-critical function may be a braking ability. Safety-relevant functions at least enhance the safety of a driving operation but is not necessarily required. A safety-relevant function may be a brake assistant function. The assignment of safety-critical and safety-relevant functions may be subject to changes in dependence of a respective driving mode. For example, a distance regulation function may be safety-relevant in a driver driving mode but may become safety-critical in an autonomous driving mode. Therefore, the at least partially identical functions of the consumers preferably comprise at least all functions that are or may become safety-critical functions in all available driving modes applicable for a respective vehicle. Other non-safety-critical or non-safety-relevant function may also be identically provided by the at least two consumers. However, with the at least two consumers comprise at least partially identical safety-critical or safety-critical and safety-relevant functions, a safe or at least fundamentally safe operation may be accomplished.

Further advantages of the energy supply management system correspond to advantages already described for the energy supply module due to their respective implementation in the energy supply management system. Accordingly, any features of the energy supply module may be also considered as features of the energy supply management system when a respective energy supply module is comprised by the energy supply management system and vice versa.

Further advantages, aspects and details of the invention are subject to the claims, the following description of a preferred embodiment applying the principles of the invention, and the respective exemplary drawing.

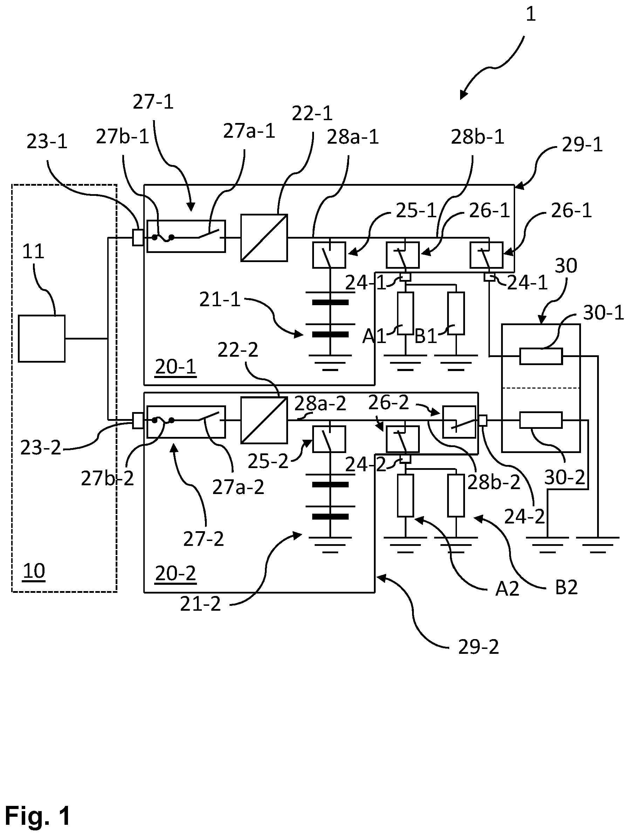

**Figure 1** is a schematic diagram of an energy supply management system according to an exemplary embodiment of the present invention.

**Figure 1** shows a schematic diagram of an energy supply management system 1 according to an exemplary embodiment of the present invention. The energy supply management system 1 comprises an energy charge system 10 with an energy charge unit 11, two energy supply modules 20-1, 20-2 and a plurality of consumer units 30, A1, B1, A2, B2. The consumer unit 30 comprises two consumers 30-1, 30-2, each of which comprises an identical set of functions.

In the exemplary embodiment, the two energy supply modules 20-1, 20-2 provide the same configuration. Accordingly, a detailed description of the energy supply modules 20-1, 20-2 is only given with respect to the energy supply module 20-1. The description also applies for the energy supply module 20-2 with same reference signs except that the index "-2" refers to the energy supply module 20-2 while the index "-1" refers to the energy supply module 20-1. The energy supply module 20-1 comprises an enclosure 29-1 with an energy input terminal 23-1 and two energy output terminals 24-1. The number of energy input terminals 23-1 and energy output terminals 24-1 may differ in alternative embodiments. Within the enclosure 29-1, the energy supply module 20-1 comprises an input energy supply line 28a-1 and an output energy supply line 28b-1, an energy storage unit 21-1, a charge management unit 22-1, an energy storage switching unit 25-1, two energy output switching units 26-1 and an energy input switching unit 27-1. In the exemplary embodiment, the input energy supply line 28a-1 and the output energy supply line 28b-1 are formed by one supply line to connect the energy input terminal 23-1 to the energy output terminals 24-1. The energy storage unit 21-1 is connectable to the input energy supply line 28a-1 and the output energy supply line 28b-1, respectively, by the energy storage switching unit 25-1. Here, the energy storage switching unit 25-1 is configured as normally open switch to be activated to connect the energy storage unit 21-1 to the input energy supply line 28a-1 and the output energy supply line 28b-1, respectively. Each of the energy output switching units 26-1 is assigned to one of the energy output terminals 24-1. The energy output switching units 26-1 are configured as normally closed switches to be activated to disconnect the respective energy output terminal 24-1 from the output energy supply line 28b-1. Each of the energy output terminals 24-1 may be disconnected from the output energy supply line 28b-1 independently. The energy input terminal 23-1 can be disconnected and connected to the input energy line 28a-1 by the energy input switching unit 27-1. The energy input switching unit 27-1 comprises a switch 27a-1 and a fuse 27b-1. The switch 27a-1 is configured as normally open switch to be activated to connect the energy input terminal 23-1 to the input energy supply line 28a-1. The switch 27a-1 may open due to an operational mode and/or due to failure as safety switch. If the switch 27a-1 fails to open in the event of a failure to disconnect the energy input terminal 23-1 from the input energy supply line 28a-1, the fuse 27b-1 may blow as redundant safety-measure. To allow the switch 27a-1 to react first before blowing the fuse 27b-1 provides an irreversible disconnection, the threshold for blowing the fuse 27b-1 is set to a higher value than the upper threshold for the switch 27a-1. A respective threshold may be a current and/or voltage threshold. The charge management unit 22-1 is arranged between the energy input switching unit 27-1 and the energy storage switching unit 25-1. In the exemplary embodiment, the charge management unit 22-1 is a DC/DC converter.

In the exemplary embodiment, the energy management supply system 1 operates as redundant energy management supply system. During a normal driving operation, the switches 27a-1, 27a-2 of the energy input switching units 27-1, 27-2 and the energy output switching units 26-1, 26-2 are closed. Accordingly, the consumer 30-1 of the consumer unit 30 and the consumer units A1, B1 receive energy from the energy charge unit 11 operating as energy supply unit connected to both energy input terminals 23-1, 23-2 via the charge management unit 22-1, the input energy supply line 28a-1, the output energy supply line 28b-1 and the respective energy output terminals 24-1. Similarly, the consumer 30-2 of the consumer unit 30 and the consumer units A2, B2 receive energy from the energy charge unit 11 via the charge management unit 22-2, the input energy supply line 28a-2, the output energy supply line 28b-2 and the respective energy output terminals 24-2. The energy storage switching units 25-1, 25-2 or the respective switches of the energy storage switching units 25-1, 25-2, respectively, are open to disconnect to energy storage units 21-1, 21-2 from the respective input energy supply line 28a-1, 28a-2 and output energy supply line 28b-1, 28-2. However, in alternative embodiments, at least one of the energy storage switching units 25-1, 25-2 or the respective switches of the energy storage switching units 25-1, 25-2, respectively, may be closed to charge the respective one of the energy storage units 21-1, 21-2 in parallel by the energy supplied by the energy charge unit 11 and/or to supply additional energy to the connected consumers 30-1, 30,2 and consumer units A1, B1, A2, B2. To only charge at least one of the energy storage units 21-1, 21-2, the respective energy storage unit 21-1, 21-2 is configured to not supply any energy to the connected consumers 30-1, 30,2 and consumer units A1, B1, A2, B2, e.g. by being deactivated. The same separation from charging the at least one of the energy storage units 21-1, 21-2 and supplying energy by the at least one of the energy storage units 21-1, 21-2 may also be implemented by a respective energy supply line routing and/or switching configurations.

In the event of a failure of the energy charge system 10, the switches 27a-1, 27a-2 of the energy input switching units 27-1, 27-2 open and the energy storage switching units 25-1, 25-2 or the respective switches of the energy storage switching units 25-1, 25-2, respectively, are closed. Accordingly, the consumer 30-1 of the consumer unit 30 and the consumer units A1, B1 receive energy from the energy storage unit 21-1 via the output energy supply line 28b-1 and the respective energy output terminals 24-1. Similarly, the consumer 30-2 of the consumer unit 30 and the consumer units A2, B2 receive energy from the energy storage unit 21-2 via the output energy supply line 28b-2 and the respective energy output terminals 24-2. As the energy supply by the respective energy storage units 21-1, 21-2 may be limited, the energy output switching units 26-1, 26-2 associated with the consumer units A1, B1 and/or with the consumer units A2, B2 may disconnect the respective energy storage units 21-1, 21-2 from the respective energy output terminals 24-1, 24-2. Further, since the consumer units 30-1, 30-2 provide identical functions, the identical functions can still be executed, even if one of the energy supply modules 20-1, 20-2 or an energy supply from the respective energy storage units 21-1, 21-2, respectively, fails.

In alternative embodiments, at least one the energy storage units 21-1, 21-2 supplies the energy for the consumer units 30, A1, B1, A2, B2 already during normal driving operations. In such event, the energy supply management system 1 may be configured to only use the energy charge system 10 for charging the at least one energy storage unit 21-1, 21-2 in parallel or on demand or as redundant energy supply.

The invention has been described with respect to an exemplary embodiment. However, the invention is not limited to the exemplary embodiment. In particular, the energy supply management system may comprise more or less than two energy supply modules. Further, the two energy supply modules may be configured differently. For example, the energy supply module may comprise a different number of energy output terminals and may therefore be associated with a different number of consumer units. As another variant, the energy supply modules may not comprise at least one energy output switching unit for each energy output terminal but may comprise at least one energy output switching unit for all energy output terminals.

### LIST OF REFERENCE SIGNS

- 1: energy supply management system
- 10: energy charge system
- 11: energy charge unit
- 20-1, 20-2: energy supply module
- 21-1, 21-2: energy storage unit
- 22-1, 22-2: charge management unit
- 23-1, 23-2: energy input terminal
- 24-1, 24-2: energy output terminal
- 25-1, 25-2: energy storage switching unit
- 26-1, 26-2: energy output switching unit
- 27-1, 27-2: energy input switching unit
- 27a-1, 27a-2: switch
- 27b-1, 27b-2: fuse
- 28a-1, 28a-2: input energy supply line
- 28b-1, 28b-2: output energy supply line
- 29-1, 29-2: enclosure
- 30: consumer unit
- 30-1, 30-2: consumer
- A1, A2, B1, B2: consumer unit

## Claims

1. Energy supply module (20-1, 20-2) for a vehicle, comprising:
at least one energy output terminal (24-1, 24-2),
at least one energy storage unit (21-1, 21-2) and
at least one output energy supply line (28b-1, 28b-2) to connect the at least one energy storage unit (21-1, 21-2) to the at least one energy output terminal (24-1, 24-2),
wherein at least one energy storage switching unit (25-1, 25-2) is arranged in or connected to the output energy supply line (28b-1, 28b-2) between the at least one energy storage unit (21-1, 21-2) and the at least one energy output terminal (24-1, 24-2) and is configured to at least disconnect the at least one energy storage unit (21-1, 21-2) from the at least one energy output terminal (24-1, 24-2),
wherein the energy supply module (20-1, 20-2) further comprises at least one energy output switching unit (26-1, 26-2) arranged in or connected to the at least one output energy supply line (28b-1, 28b-2) between the at least one energy storage switching unit (25-1, 25-2) and the at least one energy output terminal (24-1, 24-2) and is configured to at least disconnect the at least one energy output terminal (24-1, 24-2) from the at least one energy storage unit (21-1, 21-2), and
wherein the at least one energy output switching unit (26-1, 26-2) is located closer to the at least one energy output terminal (24-1, 24-2) than to the at least one energy storage switching unit (25-1, 25-2).

2. The energy supply module (20-1, 20-2) according to claim 1, wherein the at least one energy storage switching unit (25-1, 25-2) is located closer to the at least one energy storage unit (21-1, 21-2) than to the at least one energy output terminal (24-1, 24-2).

3. The energy supply module (20-1, 20-2) according to claim 1 or 2, wherein the energy supply module (20-1, 20-2) further comprises at least one energy input terminal (23-1, 23-2) and at least one input energy supply line (28a-1, 28a-2) to connect the at least one energy storage unit (21-1, 21-2) to the at least one energy input terminal (23-1, 23-2).

4. The energy supply module (20-1, 20-2) according to claim 3, wherein the at least one input energy supply line (28a-1, 28a-2) is connected to the at least one output energy supply line (28b-1, 28b-2).

5. The energy supply module (20-1, 20-2) according to claim 3 or 4, wherein the energy supply module (20-1, 20-2) further comprises at least one charge management unit (22-1, 22-2) for the at least one energy storage unit (21-1, 21-2) arranged in or connected to the input energy supply line (28a-1, 28a-2) between the at least one energy input terminal (23-1, 23-2) and the at least one energy storage unit (21-1, 21-2).

6. The energy supply module (20-1, 20-2) according to claim 5, wherein the at least one charge management unit (22-1, 22-2) comprises or is configured as a converter unit, preferably a DC/DC converter unit.

7. The energy supply module (20-1, 20-2) according to one of the claims 3 to 6, wherein the energy supply module (20-1, 20-2) further comprises at least one energy input switching unit (27-1, 27-2) arranged in or connected to the at least one input energy supply line (28a-1, 28a-2) between the at least one energy input terminal (23-1, 23-2) and the at least one energy storage switching unit (25-1, 25-2) and is configured to at least disconnect the at least one charge management unit (22-1, 22-2), the at least one energy storage unit (21-1, 21-2) and/or the output energy supply line (28b-1, 28b-2) from the energy input terminal (23-1, 23-2).

8. The energy supply module (20-1, 20-2) according to any of the preceding claims, wherein the at least one energy input switching unit (27-1, 27-2), the at least one energy output switching unit (26-1, 26-2) and/or the at least one energy storage switching unit (25-1, 25-2) is/are configured to also connect the respective one of the at least one charge management unit (22-1, 22-2), the at least one energy storage unit (21-1, 21-2) and/or the output energy supply line (28b-1, 28b-2) to the energy input terminal (23-1, 23-2), the at least one energy output terminal (24-1, 24-2) to the at least one energy storage unit (21-1, 21-2) and/or the at least one energy storage unit (21-1, 21-2) to the at least one energy output terminal (24-1, 24-2), respectively.

9. The energy supply module (20-1, 20-2) according to claim 8, wherein at least one of the at least one energy input switching unit (27-1, 27-2) and the at least one energy storage switching unit (25-1, 25-2) comprises or is configured as a normally open switch.

10. The energy supply module (20-1, 20-2) according to claim 8 or 9, wherein the at least one energy storage switching unit (25-1, 25-2) comprises or is configured as a normally closed switch.

11. The energy supply module (20-1, 20-2) according to any of the claims 8 to 10, wherein at least one of at least the at least one energy input switching unit (27-1, 27-2), the at least one energy output switching unit (26-1, 26-2) and the at least one energy storage switching unit (25-1, 25-2) comprises or is configured as a smart switch.

12. The energy supply module (20-1, 20-2) according to any of the preceding claims, wherein at least one of at least the at least one energy input switching unit (27-1, 27-2), the at least one energy output switching unit (26-1, 26-2) and the at least one energy storage switching unit (25-1, 25-2) comprises at least one switch and at least one fuse.

13. The energy supply module (20-1, 20-2) according to any of the preceding claims, wherein the energy supply module (20-1, 20-2) provides a carrier unit, preferably comprising or configured as an enclosure (29-1, 29-2) with the at least one energy output terminal (24-1, 24-2) or the at least one energy output terminal (24-1, 24-2) and the at least one energy input terminal (23-1, 23-2) as interface for the at least one energy storage unit (21-1, 21-2) enclosed by the enclosure (29-1, 29-2).

14. Energy supply management system (1) for a vehicle comprising at least one energy supply module (20-1, 20-2) according to one of the preceding claims, wherein the energy supply management system (1) comprises at least one consumer unit (30; A1, b1; A2, B2) configured to be connectable to the at least one energy output terminal (24-1, 24-2) of the at least one energy supply module (20-1, 20-2).

15. The energy supply management system (1) according to claim 14, wherein the energy supply management system (1) comprises at least two energy supply modules (20-1, 20-2) and the consumer unit (30) comprises at least two consumers (30-1, 30-2) each of which is configured to be connectable to one of the at least two energy supply modules (20-1, 20-2).

## Patentansprüche

1. Energieversorgungsmodul (20-1, 20-2) für ein Fahrzeug, umfassend:
mindestens einen Energieausgangsanschluss (24-1, 24-2),
mindestens eine Energiespeichereinheit (21-1, 21-2) und
mindestens eine Ausgangsenergieversorgungsleitung (28b-1, 28b-2) zum Verbinden der mindestens einen Energiespeichereinheit (21-1, 21-2) mit dem mindestens einen Energieausgangsanschluss (24-1, 24-2),
wobei mindestens eine Energiespeicherschalteinheit (25-1, 25-2) in der Ausgangsenergieversorgungsleitung (28b-1, 28b-2) zwischen der mindestens einen Energiespeichereinheit (21-1, 21-2) und dem mindestens einen Energieausgangsanschluss (24-1, 24-2) angeordnet oder mit dieser verbunden ist und dazu ausgebildet ist, die mindestens eine Energiespeichereinheit (21-1, 21-2) mindestens von dem mindestens einen Energieausgangsanschluss (24-1, 24-2) zu trennen,
wobei das Energieversorgungsmodul (20-1, 20-2) weiter mindestens eine Energieausgangsschalteinheit (26-1, 26-2) umfasst, die in der mindestens einen Ausgangsenergieversorgungsleitung (28b-1, 28b-2) zwischen der mindestens einen Energiespeicherschalteinheit (25-1, 25-2) und dem mindestens einen Energieausgangsanschluss (24-1, 24-2) angeordnet oder mit dieser verbunden ist und dazu ausgebildet ist, den mindestens einen Energieausgangsanschluss (24-1, 24-2) mindestens von der mindestens einen Energiespeichereinheit (21-1, 21-2) zu trennen, und
wobei die mindestens eine Energieausgangsschalteinheit (26-1, 26-2) näher an dem mindestens einen Energieausgangsanschluss (24-1, 24-2) angeordnet ist als an der mindestens einen Energiespeicherschalteinheit (25-1, 25-2).

2. Energieversorgungsmodul (20-1, 20-2) nach Anspruch 1, wobei die mindestens eine Energiespeicherschalteinheit (25-1, 25-2) näher an der mindestens einen Energiespeichereinheit (21-1, 21-2) angeordnet ist als an dem mindestens einen Energieausgangsanschluss (24-1, 24-2).

3. Energieversorgungsmodul (20-1, 20-2) nach Anspruch 1 oder 2, wobei das Energieversorgungsmodul (20-1, 20-2) weiter mindestens einen Energieeingangsanschluss (23-1, 23-2) und mindestens eine Eingangsenergieversorgungsleitung (28a-1, 28a-2) umfasst, um die mindestens eine Energiespeichereinheit (21-1, 21-2) mit dem mindestens einen Energieeingangsanschluss (23-1, 23-2) zu verbinden.

4. Energieversorgungsmodul (20-1, 20-2) nach Anspruch 3, wobei die mindestens eine Eingangsenergieversorgungsleitung (28a-1, 28a-2) mit der mindestens einen Ausgangsenergieversorgungsleitung (28b-1, 28b-2) verbunden ist.

5. Energieversorgungsmodul (20-1, 20-2) nach Anspruch 3 oder 4, wobei das Energieversorgungsmodul (20-1, 20-2) weiter mindestens eine Lademanagementeinheit (22-1, 22-2) für die mindestens eine Energiespeichereinheit (21-1, 21-2) umfasst, die in der Eingangsenergieversorgungsleitung (28a-1, 28a-2) zwischen dem mindestens einen Energieeingangsanschluss (23-1, 23-2) und der mindestens einen Energiespeichereinheit (21-1, 21-2) angeordnet oder mit dieser verbunden ist.

6. Energieversorgungsmodul (20-1, 20-2) nach Anspruch 5, wobei die mindestens eine Lademanagementeinheit (22-1, 22-2) eine Konvertereinheit umfasst oder als solche ausgebildet ist, vorzugsweise eine DC/DC-Konvertereinheit.

7. Energieversorgungsmodul (20-1, 20-2) nach einem der Ansprüche 3 bis 6, wobei das Energieversorgungsmodul (20-1, 20-2) weiter mindestens eine Energieeingangsschalteinheit (27-1, 27-2) umfasst, die in der mindestens einen Eingangsenergieversorgungsleitung (28a-1, 28a-2) zwischen dem mindestens einen Energieeingangsanschluss (23-1, 23-2) und der mindestens einen Energiespeicherschalteinheit (25-1, 25-2) angeordnet oder mit dieser verbunden ist und dazu ausgebildet ist, mindestens die mindestens eine Lademanagementeinheit (22-1, 22-2), die mindestens eine Energiespeichereinheit (21-1, 21-2) und/oder die Ausgangsenergieversorgungsleitung (28b-1, 28b-2) vom Energieeingangsanschluss (23-1, 23-2) zu trennen.

8. Energieversorgungsmodul (20-1, 20-2) nach einem der vorstehenden Ansprüche, wobei die mindestens eine Energieeingangsschalteinheit (27-1, 27-2), die mindestens eine Energieausgangsschalteinheit (26-1, 26-2) und/oder die mindestens eine Energiespeicherschalteinheit (25-1, 25-2) ausgebildet ist/sind, um auch jeweils die jeweilige der mindestens einen Lademanagementeinheit (22-1, 22-2), der mindestens einen Energiespeichereinheit (21-1, 21-2) und/oder der Ausgangsenergieversorgungsleitung (28b-1, 28b-2) mit dem Energieeingangsanschluss (23-1, 23-2), den mindestens einen Energieausgangsanschluss (24-1, 24-2) mit der mindestens einen Energiespeichereinheit (21-1, 21-2) und/oder die mindestens eine Energiespeichereinheit (21-1, 21-2) mit dem mindestens einen Energieausgangsanschluss (24-1, 24-2) zu verbinden.

9. Energieversorgungsmodul (20-1, 20-2) nach Anspruch 8, wobei mindestens eine der mindestens einen Energieeingangsschalteinheit (27-1, 27-2) und der mindestens einen Energiespeicherschalteinheit (25-1, 25-2) einen normalerweise offenen Schalter umfasst oder als solcher ausgebildet ist.

10. Energieversorgungsmodul (20-1, 20-2) nach Anspruch 8 oder 9, wobei die mindestens eine Energiespeicherschalteinheit (25-1, 25-2) einen normalerweise geschlossenen Schalter umfasst oder als solcher ausgebildet ist.

11. Energieversorgungsmodul (20-1, 20-2) nach einem der Ansprüche 8 bis 10, wobei mindestens eine der mindestens einen Energieeingangsschalteinheit (27-1, 27-2), der mindestens einen Energieausgangsschalteinheit (26-1, 26-2) und der mindestens einen Energiespeicherschalteinheit (25-1, 25-2) einen intelligenten Schalter umfasst oder als solcher ausgebildet ist.

12. Energieversorgungsmodul (20-1, 20-2) nach einem der vorstehenden Ansprüche, wobei mindestens eine der mindestens einen Energieeingangsschalteinheit (27-1, 272), der mindestens einen Energieausgangsschalteinheit (26-1, 26-2) und der mindestens einen Energiespeicherschalteinheit (25-1, 25-2) mindestens einen Schalter und mindestens eine Sicherung umfasst.

13. Energieversorgungsmodul (20-1, 20-2) nach einem der vorstehenden Ansprüche, wobei das Energieversorgungsmodul (20-1, 20-2) eine Trägereinheit bereitstellt, die vorzugsweise ein Gehäuse (29-1, 29-2) umfasst oder als solches ausgebildet ist, mit dem mindestens einen Energieausgangsanschluss (24-1, 24-2) oder dem mindestens einen Energieausgangsanschluss (24-1, 24-2) und dem mindestens einen Energieeingangsanschluss (23-1, 23-2) als Schnittstelle für die mindestens eine von dem Gehäuse (29-1, 29-2) umschlossene Energiespeichereinheit (21-1, 21-2).

14. Energieversorgungsmanagementsystem (1) für ein Fahrzeug, umfassend mindestens ein Energieversorgungsmodul (20-1, 20-2) nach einem der vorstehenden Ansprüche, wobei das Energieversorgungsmanagementsystem (1) mindestens eine Verbrauchereinheit (30; A1, b1; A2, B2) umfasst, die dazu ausgebildet ist, mit dem mindestens einen Energieausgangsanschluss (24-1, 24-2) des mindestens einen Energieversorgungsmoduls (20-1, 20-2) verbindbar zu sein.

15. Energieversorgungsmanagementsystem (1) nach Anspruch 14, wobei das Energieversorgungsmanagementsystem (1) mindestens zwei Energieversorgungsmodule (20-1, 20-2) umfasst und die Verbrauchereinheit (30) mindestens zwei Verbraucher (30-1, 30-2) umfasst, die jeweils dazu ausgebildet sind, mit einem der mindestens zwei Energieversorgungsmodule (20-1, 20-2) verbindbar zu sein.

## Revendications

1. Module d'alimentation en énergie (20-1, 20-2) pour un véhicule, comprenant :
au moins une borne de sortie d'énergie (24-1, 24-2),
au moins une unité de stockage d'énergie (21-1, 21-2) et
au moins une ligne d'alimentation en énergie de sortie (28b-1, 28b-2) pour connecter la au moins une unité de stockage d'énergie (21-1, 21-2) à la au moins une borne de sortie d'énergie (24-1, 242),
dans lequel au moins une unité de commutation de stockage d'énergie (25-1, 25-2) est agencée dans ou connectée à la ligne d'alimentation en énergie de sortie (28b-1, 28b-2) entre la au moins une unité de stockage d'énergie (21-1, 21-2) et la au moins une borne de sortie d'énergie (24-1, 24-2) et est configurée pour au moins déconnecter la au moins une unité de stockage d'énergie (21-1, 21-2) de la au moins une borne de sortie d'énergie (24-1, 24-2),
dans lequel le module d'alimentation en énergie (20-1, 20-2) comprend en outre au moins une unité de commutation de sortie d'énergie (26-1, 26-2) agencée dans ou connectée à la au moins une ligne d'alimentation en énergie de sortie (28b-1, 28b-2) entre la au moins une unité de commutation de stockage d'énergie (25-1, 25-2) et la au moins une borne de sortie d'énergie (24-1, 24-2) et est configurée pour au moins déconnecter la au moins une borne de sortie d'énergie (24-1, 24-2) de la au moins une unité de stockage d'énergie (21-1, 21-2), et
dans lequel la au moins une unité de commutation de sortie d'énergie (26-1, 26-2) est située plus près de la au moins une borne de sortie d'énergie (24-1, 24-2) que de la au moins une unité de commutation de stockage d'énergie (25-1, 25-2).

2. Module d'alimentation en énergie (20-1, 20-2) selon la revendication 1, dans lequel la au moins une unité de commutation de stockage d'énergie (25-1, 25-2) est située plus près de la au moins une unité de stockage d'énergie (21-1, 21-2) que de la au moins une borne de sortie d'énergie (24-1, 24-2).

3. Module d'alimentation en énergie (20-1, 20-2) selon la revendication 1 ou 2, dans lequel le module d'alimentation en énergie (20-1, 20-2) comprend en outre au moins une borne d'entrée d'énergie (23-1, 23-2) et au moins une ligne d'alimentation en énergie d'entrée (28a-1, 28a-2) pour connecter la au moins une unité de stockage d'énergie (21-1, 21-2) à la au moins une borne d'entrée d'énergie (23-1, 23-2).

4. Module d'alimentation en énergie (20-1, 20-2) selon la revendication 3, dans lequel la au moins une ligne d'alimentation en énergie d'entrée (28a-1, 28a-2) est connectée à la au moins une ligne d'alimentation en énergie de sortie (28b-1, 28b-2).

5. Module d'alimentation en énergie (20-1, 20-2) selon la revendication 3 ou 4, dans lequel le module d'alimentation en énergie (20-1, 20-2) comprend en outre au moins une unité de gestion de charge (22-1, 22-2) pour la au moins une unité de stockage d'énergie (21-1, 21-2) agencée dans ou connectée à la ligne d'alimentation en énergie d'entrée (28a-1, 28a-2) entre la au moins une borne d'entrée d'énergie (23-1, 23-2) et la au moins une unité de stockage d'énergie (21-1, 21-2).

6. Module d'alimentation en énergie (20-1, 20-2) selon la revendication 5, dans lequel la au moins une unité de gestion de charge (22-1, 22-2) comprend ou est configurée comme une unité de conversion, de préférence une unité de conversion CC/CC.

7. Module d'alimentation en énergie (20-1, 20-2) selon l'une des revendications 3 à 6, dans lequel le module d'alimentation en énergie (20-1, 20-2) comprend en outre au moins une unité de commutation d'entrée d'énergie (27-1, 27-2) agencée dans ou connectée à la au moins une ligne d'alimentation en énergie d'entrée (28a-1, 28a-2) entre la au moins une borne d'entrée d'énergie (23-1, 23-2) et la au moins une unité de commutation de stockage d'énergie (25-1, 25-2) et est configurée pour au moins déconnecter la au moins une unité de gestion de charge (22-1, 222), la au moins une unité de stockage d'énergie (21-1, 21-2) et/ou la ligne d'alimentation en énergie de sortie (28b-1, 28b-2) de la borne d'entrée d'énergie (23-1, 23-2).

8. Module d'alimentation en énergie (20-1, 20-2) selon l'une quelconque des revendications précédentes, dans lequel la au moins une unité de commutation d'entrée d'énergie (27-1, 27-2), la au moins une unité de commutation de sortie d'énergie (26-1, 26-2) et/ou la au moins une unité de commutation de stockage d'énergie (25-1, 25-2) est/sont configurée(s) pour connecter également l'unité respective parmi la au moins une unité de gestion de charge (22-1, 22-2), la au moins une unité de stockage d'énergie (21-1, 21-2) et/ou la ligne d'alimentation en énergie de sortie (28b-1, 28b-2) à la borne d'entrée d'énergie (23-1, 23-2), la au moins une borne de sortie d'énergie (24-1, 24-2) à la au moins une unité de stockage d'énergie (21-1, 21-2) et/ou la au moins une unité de stockage d'énergie (21-1, 21-2) à la au moins une borne de sortie d'énergie (24-1, 24-2), respectivement.

9. Module d'alimentation en énergie (20-1, 20-2) selon la revendication 8, dans lequel au moins l'une de la au moins une unité de commutation d'entrée d'énergie (27-1, 27-2) et de la au moins une unité de commutation de stockage d'énergie (25-1, 25-2) comprend ou est configurée comme un commutateur normalement ouvert.

10. Module d'alimentation en énergie (20-1, 20-2) selon la revendication 8 ou 9, dans lequel la au moins une unité de commutation de stockage d'énergie (25-1, 25-2) comprend ou est configurée comme un commutateur normalement fermé.

11. Module d'alimentation en énergie (20-1, 20-2) selon l'une quelconque des revendications 8 à 10, dans lequel au moins l'une parmi au moins la au moins une unité de commutation d'entrée d'énergie (27-1, 27-2), la au moins une unité de commutation de sortie d'énergie (26-1, 26-2) et la au moins une unité de commutation de stockage d'énergie (25-1, 25-2) comprend ou est configurée comme un commutateur intelligent.

12. Module d'alimentation en énergie (20-1, 20-2) selon l'une quelconque des revendications précédentes, dans lequel au moins l'une parmi au moins la au moins une unité de commutation d'entrée d'énergie (27-1, 27-2), la au moins une unité de commutation de sortie d'énergie (26-1, 26-2) et la au moins une unité de commutation de stockage d'énergie (25-1, 25-2) comprend au moins un commutateur et au moins un fusible.

13. Module d'alimentation en énergie (20-1, 20-2) selon l'une quelconque des revendications précédentes, dans lequel le module d'alimentation en énergie (20-1, 20-2) fournit une unité support, de préférence comprenant ou étant configurée comme un boîtier (29-1, 29-2) avec la au moins une borne de sortie d'énergie (24-1, 24-2) ou la au moins une borne de sortie d'énergie (24-1, 24-2) et la au moins une borne d'entrée d'énergie (23-1, 23-2) comme interface pour la au moins une unité de stockage d'énergie (21-1, 21-2) contenue dans le boîtier (29-1, 29-2).

14. Système de gestion d'alimentation en énergie (1) pour un véhicule comprenant au moins un module d'alimentation en énergie (20-1, 20-2) selon l'une des revendications précédentes, dans lequel le système de gestion d'alimentation en énergie (1) comprend au moins une unité de consommation (30 ; A1, b1 ; A2, B2) configurée pour pouvoir être connectée à la au moins une borne de sortie d'énergie (24-1, 24-2) du au moins un module d'alimentation en énergie (20-1, 20-2).

15. Système de gestion d'alimentation en énergie (1) selon la revendication 14, dans lequel le système de gestion d'alimentation en énergie (1) comprend au moins deux modules d'alimentation en énergie (20-1, 20-2) et l'unité de consommation (30) comprend au moins deux éléments consommateurs (30-1, 30-2), chacun étant configuré pour pouvoir être connecté à l'un des au moins deux modules d'alimentation en énergie (20-1, 20-2).
